# EUROPÄISCHE PATENTSCHRIFT

(11) **EP 3 511 566 B1**
(45) Veröffentlichungstag und Bekanntmachung des Hinweises auf die Patenterteilung: **17.03.2021**
(21) Anmeldenummer: 19151855.4
(22) Anmeldetag: 15.01.2019
(51) Int. Cl.: F03D 13/10, F03D 13/20, F16F 7/08, F16F 7/14

(54) **VERFAHREN UND EINRICHTUNG ZUR DÄMPFUNG VON TURMSCHWINGUNGEN BEI EINER WINDENERGIEANLAGE**
METHOD AND DEVICE FOR DAMPING TOWER OSCILLATIONS OF A WIND TURBINE
PROCÉDÉ ET DISPOSITIF D'AMORTISSEMENT DES VIBRATIONS DE LA TOUR DANS UNE ÉOLIENNE

(30) Priorität: 16.01.2018 DE 102018100868
(43) Veröffentlichungstag der Anmeldung: 17.07.2019
(73) Patentinhaber: Nordex Energy SE & Co. KG, 22419 Hamburg (DE)
(72) Erfinder: Hartung, Bastian, 22305 Hamburg (DE); Pollmann, Frank, 22391 Hamburg (DE)
(74) Vertreter: Grünbaum, Annekathrin

(56) Entgegenhaltungen:
- JP-A- S60 126 473
- US-A1- 2009 142 178

## Beschreibung

Die Erfindung betrifft ein Verfahren und eine Einrichtung zur Dämpfung von Turmschwingungen bei einer Windenergieanlage, insbesondere in der Errichtungsphase.

Windenergieanlagen sind bei starken Winden großen zeitveränderlichen Belastungen ausgesetzt. Windenergieanlagen werden entsprechend internationalen Vorschriften so konstruiert, dass sie sehr hohen Windgeschwindigkeiten widerstehen können. Für die Auslegung der Türme von Windenergieanlagen sind zudem Schwingungen zu berücksichtigen, die durch sich entlang der Turmhöhe seitlich alternierend ablösende Luftwirbel ausgelöst werden. Die Schwingungen treten quer zur Anströmrichtung der Anlage innerhalb eines kritischen Windgeschwindigkeitsbandes auf. Grundsätzlich sind diese wirbelerregten Querschwingungen hinsichtlich der Schädigung von Bauteilen durch Ermüdung relevant. Darüber hinaus kann auch die Tragfähigkeit des Turms gefährdet sein. Wegen des Einflusses des Rotors ist der Turm nicht bei jeder Anströmrichtung gefährdet für wirbelerregte Querschwingungen mit großen Amplituden.

Ein Reduzieren von Schwingungen des Turms einer Windenergieanlage ist besonders dann wichtig, wenn die Windenergieanlage sich noch in einer Installationsphase befindet und den Schwingungen noch nicht mit aktiven Steuerungsmaßnahmen, wie beispielsweise einer Azimut- und/oder Rotorblattverstellung begegnet werden kann. Es sind verschiedene Vorrichtungen und Einrichtungen zum Dämpfen von Turmschwingungen bekannt.

Aus der DE 103 09 825 A1 ist beispielsweise eine Windenergieanlage mit einem mit Abspannungen versehenen Turm bekannt, dort sind zur Dämpfung von Schwingungen des Turms im Kraftfluss der Abspannungen steuerbare hydraulische Dämpfungsvorrichtungen turmseitig angeordnet.

Die US 9 150 380 B2 zeigt eine Windenergieanlage mit einem mit Abspannungen versehenen Turm, wobei dort zur Dämpfung von Schwingungen des Turms federbasierende mechanische Dämpfungsvorrichtungen bodenseitig vorgesehen sind.

Die WO 2015/110580 A1 offenbart einen Turm für eine Windenergieanlage mit sechs zu einer Längsachse des Turms geneigten Abspannelementen, durch die der Turm abschnittsweise abgespannt ist. Die Abspannelemente sind jeweils an einem von der Turmwandung des Turms radial beabstandeten Lasteinleitungspunkt des Turms befestigt und radial außerhalb des Turms im Baugrund verankert, wobei jedes Abspannelement tangential zur Turmwandung vom Lasteinleitungspunkt zum Baugrund verläuft.

Diese Systeme funktionieren im Betrieb zufriedenstellend. Der dauerhafte Einsatz derartiger Abspannungen hat bei Windenergieanlagen allerdings erhebliche Nachteile, da Windenergieanlagen dynamischen Belastungen ausgesetzt sind. Die durch die Abspannungen bewirkten Krafteinleitungen in die Windenergieanlage an den Krafteinleitungspunkten können zu Materialermüdungsproblemen führen. Nachteilig ist zudem der von der Abspannungsvorrichtung dauerhaft beanspruchte erhöhte Platzbedarf gegenüber einem nicht abgespannten Turm.

Als weiterer Stand der Technik ist die US 2009/0142178 A1 bekannt. Hier wird_eine Windenergieanlage u.a. mit einem Stahlrohrturm und einer Steuerung zum Festlegen von Schwingungssteuerungswerten der Windenergieanlage offenbart. Die Windenergieanlage ist in der Lage, die Last zum Optimieren der Turmeigenfrequenz als Reaktion auf die erfassten Werte der Steuerung zu verändern. Die Erfindung bezieht sich auch auf ein Steuerungssystem und ein Verfahren zur Änderung der Eigenfrequenz eines Turms einer Windenergieanlage. Dazu sind innerhalb des Turms in Längsrichtung Lastwechselmittel in Form von Verbindungsmitteln, die als zwei Drähte, Stäbe oder dergleichen ausgebildet sind, verspannt. Durch Änderung der Spannung der Verbindungsmittel ist es möglich, die Steifigkeit des Turms zu verändern, wodurch auch die kritische Eigenfrequenz oder die kritischen Eigenfrequenzen des Turms verändert werden können. Die vorgenannte Optimierung der Steifigkeit des Turms kann auch bei Errichtung der Windenergieanlage genutzt werden.

In JP S60126473 wird eine Schwingungsdämpfungsvorrichtung für eine turmartige Struktur dargestellt, welche außerhalb der turmartigen Struktur in Form eines Seils von der Spitze zum Fundament der turmartigen Struktur angeordnet ist und konfiguriert ist, um die Richtung der Kraft eines auf das Seil wirkenden Gewichts zu ändern. Ein hydraulischer Dämpfer ist mit dem Seil verbunden.

### Darstellung der Erfindung

Es ist eine Aufgabe der Erfindung, ein Verfahren zum Dämpfen von Schwingungen eines Turms einer Windenergieanlage, insbesondere während des Errichtens des Turms und der Windenergieanlage, bereitzustellen, wobei der Turm eine Mehrzahl von Turmsektionen aus Stahl oder Beton umfasst und wobei eine Adaption einer Dämpfungseinrichtung an die Windenergieanlage einfach und insbesondere ohne ein in den Boden eingebrachtes, dauerhaftes Fundament erfolgen soll. Es ist damit einhergehend eine Aufgabe der Erfindung, eine entsprechende Dämpfungseinrichtung für einen Turm einer Windenergieanlage bereitzustellen, die modular aufgebaut und temporär sowie flexibel für verschiedene Turmhöhen und Turmdurchmesser anpassbar und einsetzbar ist.

Die Aufgabe wird gelöst durch ein Verfahren zum Dämpfen von Schwingungen eines Turms einer Windenergieanlage während des Errichtens des Turms und der Windenergieanlage, welcher eine Mehrzahl von Turmsektionen aus Stahl oder Beton umfasst, die jeweils ein unteres und ein oberes Anschlusselement aufweisen, wobei an zumindest einer Turmsektion wenigstens ein Kraftaufnahmeelement, bevorzugt zwei, besonders bevorzugt vier Kraftaufnahmeelemente benachbart zum oberen Anschlusselement angeordnet sind, mit den Schritten:
a) Errichten eines Turms mit einer Mehrzahl von Turmsektionen,
b) Anschlagen eines ersten Endes eines ersten Stahlseils, nämlich eines Spiralseils, an einem ersten Kraftaufnahmeelement einer vorbestimmten Turmsektion,
c) Verbinden des zweiten Endes des ersten Stahlseils mit einem Ende eines zweiten Stahlseils, nämlich eines Rundlitzenseils,
d) Führen des zweiten Stahlseils durch eine Umlenkeinheit einer ersten Dämpfungsvorrichtung mit wenigstens einem Umlenkmittel, wobei
   die Dämpfungsvorrichtung auf einer Geländeoberfläche außerhalb des Turms und beabstandet vom Turm positioniert ist, und
e) Verbinden des anderen Endes des zweiten Stahlseils mit einer Ballastmasse der ersten Dämpfungsvorrichtung.

Zur Dämpfung von Querschwingungen wird vorteilhafterweise vor dem Anschlagen des ersten Endes des Stahlseils das Kraftaufnahmeelement an der Turmsektion im Wesentlichen quer zu einer Hauptwindrichtung ausgerichtet und/oder montiert. Die Hauptwindrichtung ist eine Richtung, aus der der Wind besonders oft und/oder besonders lange weht. Vorzugsweise ist das Kraftelement benachbart zum oberen Anschlusselement angeordnet, wobei das Anschlusselement bei Stahlrohrturmsektionen bevorzugt als Ringflansch ausgebildet ist.

In einer bevorzugten Weiterbildung des Verfahrens wird ein zweites Kraftaufnahmeelement an der Turmsektion derart angeordnet oder montiert, dass dieses um ca. 90° am Umfang der Turmsektion gegenüber der Position des ersten Kraftaufnahmeelements versetzt ist. Es erfolgen nachfolgend die zusätzlichen Schritte:
k) Anschlagen eines ersten Endes eines dritten Stahlseils, insbesondere eines Spiralseils an dem zweiten Kraftaufnahmeelement an der oder einer weiteren Turmsektion, wobei die weitere Turmsektion oberhalb der zuvor installierten Turmsektion angeordnet ist.
I) Verbinden des zweiten Endes des dritten Stahlseils mit einem Ende eines vierten Stahlseils, vorzugsweise eines Rundlitzenseils,
m) Führen des vierten Stahlseils durch eine Umlenkeinheit einer zweiten Dämpfungsvorrichtung mit wenigstens einem Umlenkmittel,
n) Verbinden des anderen Ende des vierten Stahlseils mit einer Ballastmasse der zweiten Dämpfungsvorrichtung.

Hiermit wird zum einen einer Änderung der Windrichtung Rechnung getragen. Zum anderen wird durch eine zweite Dämpfungseinrichtung nebst Abspannseilen bzw. Stahlseilen an einer anderen, insbesondere oberen Turmsektion sichergestellt, dass beim "Wachsen" des Turmes während des Errichtens stets eine Dämpfungseinrichtung wirksam ist.

Bevorzugt erfolgt die Durchführung des Verfahrens mit den zusätzlichen Schritten:
Positionieren der ersten und/oder der zweiten Dämpfungsvorrichtung radial vom Turm soweit beabstandet bzw. entfernt, dass der Winkel des Spiralseils zu einer horizontalen Ebene an der Dämpfungsvorrichtung 30° bis 80° und/oder der Abstand zum Turm ca. 25 bis 240 Meter beträgt. Hierbei finden der Errichtungsgrad, nämlich teilerrichteter Turm, vollständiger Turm ohne oder mit installiertem Maschinenhaus und ggf. mit montierten Rotorblättern Berücksichtigung. Weiterhin wird die Geländebeschaffenheit berücksichtigt. Nicht zuletzt findet die Masse und der Durchhang des jeweiligen Abspannseils bzw. Stahlseils Berücksichtigung.

Besonders bevorzugt erfolgt die Durchführung des Verfahrens mit den zusätzlichen Schritten: Einstellen der ersten und/oder zweiten Dämpfungsvorrichtung auf einen vorbestimmten Dämpfungswert durch Verändern der Position des wenigstens einen Umlenkmittels derart, dass ein Gesamtumschlingungswinkel *β* (beta) und damit der Reibungswiderstand vermindert oder erhöht wird. Für den Fall, dass die Dämpfungsvorrichtung zwei Umlenkmittel aufweist, erfolgt das Einstellen der ersten und/oder zweiten Dämpfungsvorrichtung auf einen vorbestimmten Dämpfungswert durch Verändern der Position eines ersten Umlenkmittels und/oder eines zweiten Umlenkmittels derart, dass sich der Abstand zwischen dem ersten Umlenkmittel und dem zweiten Umlenkmittel und somit der Gesamtumschlingungswinkel *β* (beta) und damit der Reibungswiderstand vermindert oder erhöht, wobei der Gesamtumschlingungswinkel *β* (beta) aus den einzelnen Umschlingungswinkeln *β*₁ (beta1) des ersten Umlenkmittels und *β*₂ (beta2) des zweiten Umlenkmittels gebildet ist. Der Umschlingungswinkel gibt den Kontaktbereich des Seils mit dem Umlenkmittel an.

Für den Fall, dass die erste und/oder zweite Dämpfungsvorrichtung eine andere Ausbildung mit einem Schwenkhebel und einer damit in Wirkverbindung stehenden einstellbaren Reibungseinheit aufweist, erfolgt das Einstellen der Dämpfungsvorrichtung auf einen vorbestimmten Dämpfungswert durch ein Verändern der Winkelstellung des Schwenkhebels.

Zu Beginn und/oder während der Durchführung des erfindungsgemäßen Verfahrens erfolgt vorzugsweise ein Ermitteln der Windrichtung und der Windstärke sowie der Turmbewegungen mit Hilfe von geeigneten Sensoren, um die Dämpfungswirkung gezielt einstellen und gegebenenfalls nachjustieren zu können.

Besonders bevorzugt erfolgen nach der Inbetriebnahme der Windenergieanlage die weiteren Schritte: Demontieren des Stahlseils oder der Stahlseile mittels eines Führungs- oder Hilfsseils und Entfernen der Dämpfungsvorrichtung.

Die Aufgabe wird auch gelöst durch eine Dämpfungseinrichtung für einen Turm einer Windenergieanlage zur Durchführung des Verfahrens mit einer Mehrzahl von Turmsektionen aus Stahl, umfassend eine Dämpfungsvorrichtung, welche ein Gestell, beispielsweise einen Stahlrahmen, eine Umlenkeinheit und eine Ballastmasse umfasst, wobei die Dämpfungsvorrichtung auf einer Geländeoberfläche außerhalb des Turms und beabstandet vom Turm positioniert ist, und umfassend ein über die Umlenkeinheit geführtes Stahlseil, das einerseits mit der Ballastmasse und andererseits mit wenigstens einem Kraftaufnahmeelement an zumindest einer Turmsektion verbunden ist, wobei die Umlenkeinheit wenigstens ein erstes Umlenkmittel aufweist, wobei das erste Umlenkmittel zum Verändern der Dämpfung in seiner Lage veränderbar ist. Erfindungsgemäß weist das Stahlseil einen ersten Abschnitt auf, der als Spiralseil ausgebildet ist und an dem Kraftaufnahmeelement der Turmsektion angeschlagen ist, und einen zweiten Abschnitt, der als Rundlitzenseil ausgebildet ist, welches über die Umlenkeinheit geführt ist und mit der Ballastmasse der Dämpfungsvorrichtung verbunden ist, wobei das Spiralseil und das Rundlitzenseil durch eine Klemmverbindung miteinander, insbesondere lösbar, verbunden sind. Die erfindungsgemäße Kombination und Verbindung zweier Stahlseilarten weist viele Vorteile hinsichtlich der vorliegenden Aufgabe auf:
- Das Spiralseil ist besonders gut als steifes Verbindungsseil zwischen Turm und Dämpfungsvorrichtung geeignet, wogegen das Rundlitzenseil besonders gut über Umlenkungen und/oder Rollen geführt werden kann,
- das Spiralseil ist hinsichtlich der Turmhöhe in Länge, Durchmesser und Masse separat anpassbar,
- das Rundlitzenseil ist hinsichtlich der Turmhöhe in Länge, Durchmesser und Biegefähigkeit separat anpassbar,
- das Rundlitzenseil ist bezüglich der Anzahl der Rundlitzen in Bezug auf die Seilreibung separat vorsehbar,
- bei Beschädigung des Spiralseils oder des Rundlitzenseil sind diese jeweils einzeln austauschbar,
- die Montagezeit für die Installation einer Dämpfungseinrichtung kann erheblich verkürzt werden, so kann das Spiralseil bereits an der liegenden Turmsektion angeschlagen werden und das Rundlitzenseil kann bereits mit der Dämpfungsvorrichtung verbunden sein.

In einer vorteilhaften Ausgestaltung weist das Spiralseil an seinem von der Klemmverbindung entfernten Ende ein Anschlagelement auf, welches mit einem Lastanschlagmittel an der Turmsektion, insbesondere mittels weiterer Verbindungsglieder lösbar verbindbar oder verbunden ist, wobei das Anschlagelement vorzugsweise als Kausche oder Gabelkopf ausgebildet sein kann.

Das Rundlitzenseil weist an seinem von der Klemmverbindung entfernten Ende ein Anschlagelement auf, welches mit der Ballastmasse verbindbar oder verbunden ist.

Bevorzugt weist die Dämpfungseinrichtung neben dem ersten ein zweites Umlenkmittel auf, wobei wenigstens ein Umlenkmittel in wenigstens einer Ebene, vorzugsweise in zwei Ebenen verschiebbar gelagert ist, wodurch der Gesamtumschlingungswinkel *β* (beta) für das Stahlseil insbesondere im Bereich von 10° bis 240° einstellbar ist.

In einer vorteilhaften Ausbildung ist das Rundlitzenseil nacheinander über das erste und das zweite Umlenkmittel führbar oder geführt, wobei die Umlenkmittel zumindest teilweise eine konvexe Oberfläche aus einem Material aufweisen, welches in Verbindung mit einem Rundlitzenstahlseil im trockenen Zustand einen Gleitreibungskoeffizienten von größer 0,3, vorzugsweise größer 0,4 ergibt. Als geeignetes Material hat sich durch Versuche ein Hartholz und/oder dauerhaftes Holz, wie beispielsweise Buche, Eiche oder Lärche ergeben.

In einer vorteilhaften Ausgestaltung können das erste und/oder das zweite Umlenkmittel jeweils als starre Umlenkbalken mit wenigsten einer abgerundeten Längskante oder mit einer parallel zur Längsachse verlaufenden konvexen Oberfläche oder als dreh- und bremsbare Umlenkrolle ausgebildet sein, die bevorzugt quer zur Achse bzw. Welle verschiebbar gelagert ist.

In einer alternativen bevorzugten Ausgestaltung der Dämpfungsvorrichtung mit einem Schwenkhebel, der mit einer Reibungseinheit in Wirkverbindung steht, ist der Schwenkhebel schwenkbar an der Reibungseinheit gelagert und die Reibungseinheit weist wenigstens ein stationäres Reibungselement und wenigstens ein bewegbares Reibungselement auf, wobei das bewegbare Reibungselement mit dem Schwenkhebel in Wirkverbindung steht.

Weiter bevorzugt weist das Stahlseil einen ersten, als Spiralseil ausgebildeten Abschnitt und einen zweiten, als Rundlitzenseil ausgebildeten Abschnitt auf, wobei das Spiralseil und/oder das Rundlitzenseil an dem von der Reibungseinheit entfernten Ende des Schwenkhebels lösbar befestigt sind.

Ein Turm einer Windenergieanlage umfasst eine Mehrzahl von Turmsektionen aus Stahl oder Beton, die jeweils ein unteres und ein oberes Anschlusselement aufweisen, wobei an zumindest einer Turmsektion wenigstens ein Kraftaufnahmeelement, bevorzugt zwei und besonders bevorzugt vier Kraftaufnahmeelemente benachbart zum oberen Anschlusselement angeordnet sind und wobei an der Turmsektion ein Stahlseil einer ersten Dämpfungseinrichtung an einem ersten Kraftaufnahmeelement in einer vorbestimmten Höhe anschlagbar ist, wobei das Stahlseil ein bodennahes Ende aufweist, das mit einer Ballastmasse einer ersten bodenseitigen Dämpfungsvorrichtung verbindbar oder verbunden ist, die beabstandet zum Turm in radialer Ausrichtung von dessen Mittelachse in einer vertikalen Ebene mit dem Kraftaufnahmeelement positionierbar ist, wobei die Dämpfungseinrichtung bevorzugt, wie zuvor beschrieben, ausgebildet ist.

In einer Weiterbildung ist ein weiteres Stahlseil einer zweiten Dämpfungseinrichtung vorhanden, welches an einem zweiten Kraftaufnahmeelement an der Turmsektion anschlagbar ist, wobei das zweite Kraftaufnahmeelement um ca. 90° am Umfang der Turmsektion gegenüber der Position des ersten Kraftaufnahmeelements versetzt ist. Das Stahlseil der zweiten Dämpfungseinrichtung weist ein bodennahes Ende auf, das mit einer zweiten Ballastmasse einer zweiten bodenseitigen Dämpfungsvorrichtung verbindbar oder verbunden ist, wobei die Dämpfungsvorrichtung beabstandet zum Turm in radialer Ausrichtung von dessen Mittelachse positionierbar ist. Der Winkel *α* (alpha) des Stahlseils oder der Stahlseile bezogen auf die Mittelachse des Turms liegt bevorzugt im Bereich von 10° bis 60° .

In einer ersten vorteilhaften Ausgestaltung ist das oder jedes Kraftaufnahmeelement, insbesondere Lastanschlagmittel mittels eines ringförmigen Spannelements außen am Turm gehaltert.

In einer zweiten vorteilhaften Ausgestaltung ist das oder jedes Kraftaufnahmeelement, insbesondere Lastanschlagmittel als Durchführungseinheit in der Turmwandung ausgebildet, wobei die Durchführungseinheit insbesondere einen sogenannten Wirbelbock, Lastring, Ringbock oder Lastbock umfasst. Der Einfachheit halber wird nachfolgend der Begriff Lastbock benutzt.

In einer bevorzugten Weiterbildung weist die Turmwandung senkrecht oberhalb der oder jeder ersten Wanddurchführung für die Durchführungseinheit eine zweite Wanddurchführung zum Durchführen eines Führungsseils auf, welches mittels eines Seilknotens über einen Ovalring mit dem Spiralseil verbindbar oder verbunden ist.

In einer bevorzugten Weiterbildung ist eine Mehrzahl von Windsensoren an einer oder der Turmsektion angeordnet, wobei die Windsensoren bevorzugt ringförmig in einer Ebene am Turm angeordnet sind.

Besonders bevorzugt ist wenigstens ein Beschleunigungs- oder Schwingungssensor an einer oder der Turmsektion und/oder im Maschinenhaus angeordnet, die von diesen Sensoren gelieferten Signale können direkt oder über eine Auswerteeinheit einer Steuereinheit der Dämpfungsvorrichtung zugeführt werden.

Durch den Einsatz der erfindungsgemäßen Dämpfungseinrichtung wird ein Aufschwingen des Windenergieanlagenturms bei kritischer Anströmung unterbunden, hierdurch können Anlageschäden nachhaltig vermieden werden.

Durch den Einsatz der erfindungsgemäßen Dämpfungseinrichtung, mit einem in verschiedenen Höhen anschlagbaren Abspannseil in Form eines Stahlseils, kann verschiedenen Eigenschwingungsformen begegnet werden, nämlich eine erste Eigenschwingungsform horizontal in Höhe des Turmkopfs und eine zweite Eigenschwingungsform mit einem sogenannten Schwingungsbauch in einer mittleren Höhe des Turmes.

Die erfindungsgemäßen Dämpfungseinrichtung zeichnet sich insbesondere dadurch aus, dass sie in sämtlichen Lebensphasen einer Windenergieanlage schnell und mit wenig Aufwand einsetzbar ist, nämlich in der
- Errichtungsphase,
- Betriebsphase,
- Wartungsphase,
- Stillsetzungsphase und
- Demontagephase.

Nachstehend sind zwei Ausführungsbeispiele der erfindungsgemäßen Dämpfungseinrichtung unter Bezugnahme auf die beigefügten Zeichnungen beschrieben, in denen
- Fig. 1: eine schematische Ansicht einer Windenergieanlage mit einer Dämpfungseinrichtung gemäß der Erfindung,
- Fig. 2: eine schematische Ansicht eines Turmabschnitts mit einer Dämpfungseinrichtung in einer ersten Ausgestaltung gemäß der Erfindung,
- Fig. 3: eine schematische Draufsicht einer Turmsektion mit einer Dämpfungseinrichtung gemäß der Erfindung,
- Fig. 4: eine schematische Draufsicht einer Turmsektion mit zwei Dämpfungseinrichtungen gemäß der Erfindung,
- Fig. 5: eine weitere schematische Ansicht eines Turmabschnitts mit einer Dämpfungseinrichtung in der ersten Ausgestaltung gemäß der Fig. 2,
- Fig. 6: eine schematische Ansicht eines Turmabschnitts mit einer Dämpfungseinrichtung in einer zweiten Ausgestaltung gemäß der Erfindung,
- Fig. 7: eine schematische Ansicht einer Turmwanddurchführungseinheit der Erfindung und
- Fig. 8: eine schematische Ansicht einer Turmwanddurchführung mit einem Führungsseil zeigt.

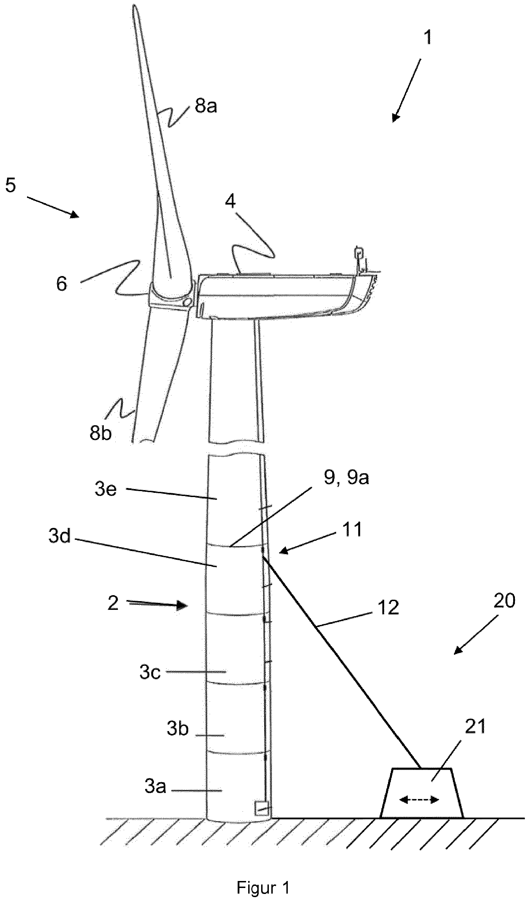

Die Fig. 1 zeigt eine Windenergieanlage 1 mit einem Turm 2, einem Maschinenhaus 4 und einem Rotor 5. Der Rotor 5 weist drei Rotorblätter 8a, 8b auf, die an einer Rotornabe 6 drehbar gelagert sind. Von den drei Rotorblättern 8a, 8b sind in der Seitenansicht lediglich zwei Rotorblätter 8a und 8b zu erkennen, wobei das Rotorblatt 8b zur besseren Übersicht in der Figur geschnitten dargestellt ist. Der Turm 2 besteht aus einer Mehrzahl von übereinander angeordneten Turmsektionen 3a, 3b, 3c, 3d, 3e, welche durch Anschlusselemente 9 miteinander verbunden sind. Bei dem im Ausführungsbeispiel gezeigten Stahlturm sind die Anschlusselemente 9 als Ringflansch 9a ausgebildet. Wie die Fig. 1 erkennen lässt, ist im oberen Abschnitt der vierten Turmsektion 3d benachbart zum Ringflansch 9a an einem Turmanschlagpunkt (TAP) ein Kraftaufnahmeelement 11 zum Anschlagen eines Stahlseils 12 einer Dämpfungseinrichtung 20 vorgesehen. Das untere Ende des Stahlseils 12 ist in eine Dämpfungsvorrichtung 21 der Dämpfungseinrichtung 20 geführt, wobei die Dämpfungsvorrichtung 21 auf dem Gelände in verschiedenen Abständen zu der untersten Turmsektion 3a, beispielsweise mittels eines nicht dargestellten Gabelstaplers oder Radladers, positionierbar ist, wie dies durch den Doppelpfeil angedeutet ist.

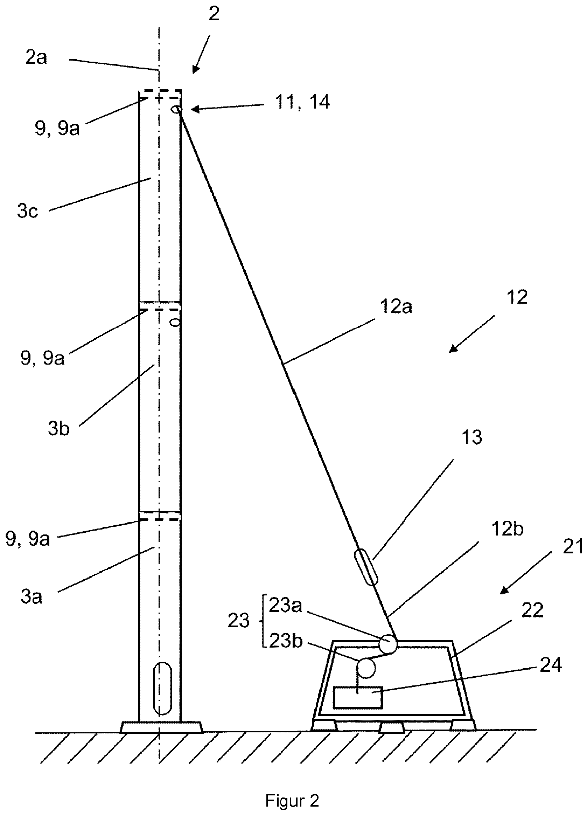

Die Fig. 2 zeigt einen Abschnitt eines Turmes 2 mit einer Dämpfungseinrichtung 20 gemäß der Erfindung. Der Turmabschnitt umfasst beispielhaft drei Turmsektionen 3a, 3b, 3c. Wie die Fig. 2 erkennen lässt, ist im oberen Abschnitt der dritten Turmsektion 3c benachbart zum Ringflansch 9a an einem Turmanschlagpunkt (TAP) ein Kraftaufnahmeelement 11 und eine Durchführungseinheit 14 zum Anschlagen eines oberen Abschnitts des Stahlseils 12 in Form eines Spiralseils 12a vorgesehen. Der untere Abschnitt des Stahlseils 12 in Form eines Rundlitzenseils 12b ist in die Dämpfungsvorrichtung 21 geführt. Wie die Fig. 2 weiter zeigt, ist das zweite bzw. untere Ende des Spiralseils 12a mit einem oberen Ende des Rundlitzenseils 12b durch einen Klemmverbinder 13, beispielsweise "Crosby First Grip 429", verbunden. Der untere Abschnitt des Rundlitzenseils 12b ist durch eine Umlenkeinheit 23, im Wesentlichen bestehend aus zwei Umlenkmitteln 23a, 23b, der Dämpfungsvorrichtung 21 geführt und mit einer Ballastmasse 24 verbunden, die für die notwendige Vorspannung sorgt. Die Umlenkmittel 23a, 23b sind im Ausführungsbeispiel in einem Stahlrahmen 22 mit trapezförmigem Querschnitt gelagert.

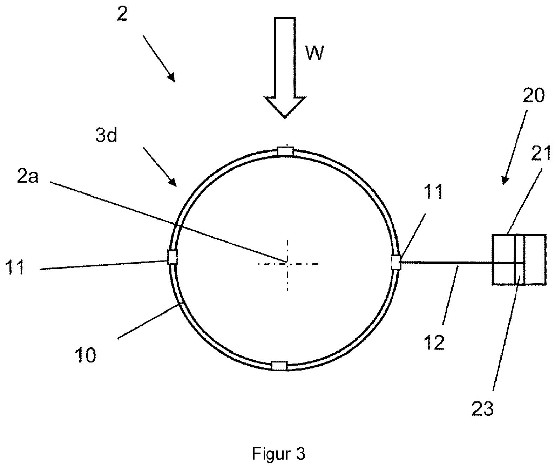

Die Fig. 3 zeigt eine schematische Draufsicht einer Turmsektion 3d eines Turms 2 mit einer Dämpfungseinrichtung 20 gemäß der Erfindung. In der Turmwandung 10 sind vier, jeweils um 90° am Umfang versetzte Kraftaufnahmeelemente 11 vorgesehen, wobei an dem Kraftaufnahmeelement 11 in der gezeigten 3-Uhr-Position das Stahlseil 12 angeschlagen und mit der Dämpfungsvorrichtung 21 verbunden ist, dort läuft das Stahlseil 12 von oben in die Umlenkeinheit 23 ein. In Bezug auf eine gedachte Kompassrose ist die Dämpfungsvorrichtung 21 in Fig. 3 quer zur (Haupt-) Windrichtung Nord gemäß Pfeil W nach Osten ausgerichtet.

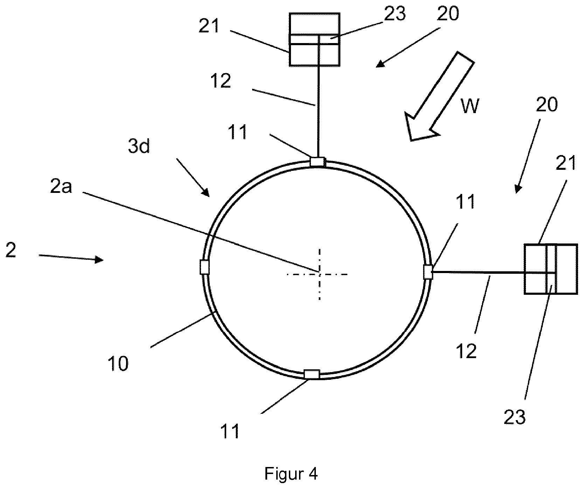

Die Fig. 4 zeigt eine schematische Draufsicht einer Turmsektion 3d eines Turms 2 mit zwei Dämpfungseinrichtungen 20 gemäß der Erfindung. In der Turmwandung 10 sind wiederum vier, jeweils um 90° am Umfang versetzte Kraftaufnahmeelemente 11 vorgesehen, wobei an den Kraftaufnahmeelementen 11 in der gezeigten 3-Uhr-Position und der 12-Uhr-Position jeweils ein Stahlseil 12 angeschlagen und mit der zugeordneten Dämpfungsvorrichtung 21 verbunden ist. In Bezug auf eine gedachte Kompassrose ist die erste Dämpfungsvorrichtung 21 in Fig. 4 nach Osten und die zweite Dämpfungsvorrichtung 21 nach Norden ausgerichtet, wobei dort gemäß Pfeil W die (Haupt-) Windrichtung Nordost ist bzw. der Wind aus Nordost kommt.

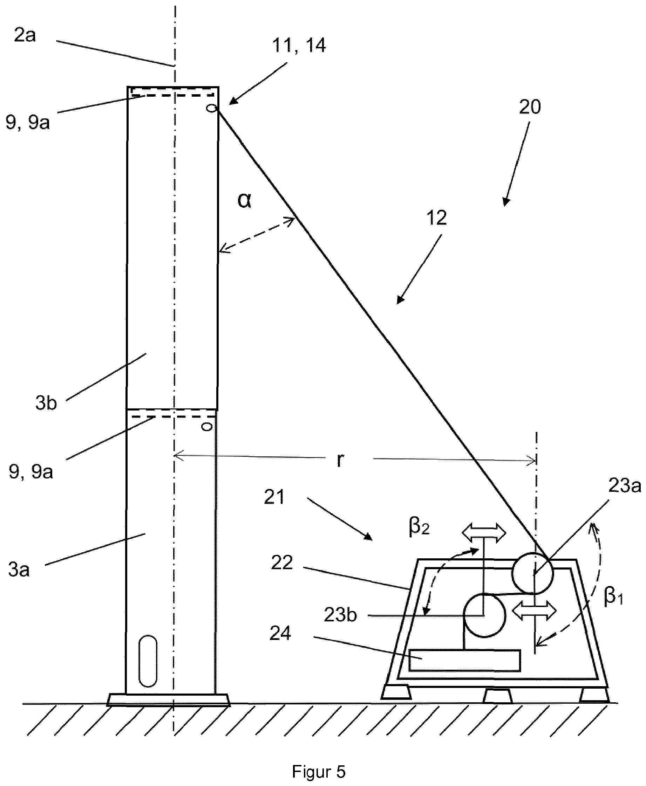

Die Fig. 5 zeigt einen Abschnitt eines Turms 2 mit einer Dämpfungseinrichtung 20 gemäß der Erfindung. Der Turmabschnitt umfasst dort darstellungsbedingt lediglich zwei Turmsektionen 3a und 3b. Wie die Fig. 5 erkennen lässt, sind im oberen Abschnitt der zweiten Turmsektion 3b benachbart zum Ringflansch 9a an einem Turmanschlagpunkt (TAP) ein Kraftaufnahmeelement 11 und eine Durchführungseinheit 14 zum Anschlagen des oberen Abschnitts des Stahlseils 12 unter einem Winkel *α* (alpha) vorgesehen. An dieser Stelle sei darauf hingewiesen, dass das Stahlseil 12 bzw. das Spiralseil 12a und das Rundlitzenseil 12b stets einen gewissen Durchhang haben, welcher in den Figuren der Einfachheit halber nicht dargestellt ist. Der untere Abschnitt des Stahlseils 12 ist in die Dämpfungsvorrichtung 21 geführt und läuft dort im Uhrzeigersinn über das erste (obere) Umlenkmittel 23a und nachfolgend entgegen dem Uhrzeigersinn über das zweite (untere) Umlenkmittel 23b bis zur Ballastmasse 24, mit welcher das Stahlseil 12 - oder genauer das in Fig. 5 nicht explizit dargestellte Rundlitzenseil 12b - verbunden ist. Der Abstand r von der Achse des ersten (oberen) Umlenkmittels 23a bis zur Mittelachse 2a des Turms 2 bestimmt, als ein Parameter von mehreren Parametern, den Dämpfungsgrad bzw. die Dämpfungswirkung der Dämpfungseinrichtung 20. Ein weiterer Parameter ist der Gesamtumschlingungswinkel *β* (beta), welcher aus der Summe der einzelnen Umschlingungswinkel *β*₁ (beta1) des ersten Umlenkmittels 23a und *β*₂ (beta2) des zweiten Umlenkmittels 23b gebildet ist. Wie die Doppelpfeile in Fig. 5 oberhalb der Umlenkmittel 23a, 23b zeigen, sind diese im Ausführungsbeispiel in dem Stahlrahmen 22 - zwecks Einstellung der Umschlingungswinkel *β*₁ (beta1), *β*₂ (beta2) und damit der Reibkraft - horizontal verschiebbar und fixierbar gelagert. Die in Fig. 2 und in Fig. 5 gezeigten Anordnungen der Umlenkmittel 23a, 23b sind beispielhaft. Die Umlenkmittel 23a, 23b können auch in anderen Ebenen, beispielsweise in einer gemeinsamen horizontalen Ebene angeordnet sein. Die Ausgestaltungen der Umlenkmittel 23a, 23b zur Erzielung einer definierten Reibkraft sind dabei vielfältig. Die Umlenkmittel 23a, 23b weisen zumindest teilweise eine konvexe Oberfläche aus einem Material auf, welches in Verbindung mit einem Rundlitzenstahlseil einen Gleitreibungskoeffizienten von größer als 0,3, vorzugsweise größer als 0,4 ergibt. Als geeignetes Material hat sich durch Versuche ein Hartholz, wie beispielsweise Buche oder Eiche ergeben oder auch Lärche als dauerhaftes Holz. In einer ersten Ausgestaltung können die Umlenkmittel 23a, 23b als starre Umlenkbalken oder starre Umlenkzylinder ausgebildet sein. In einer zweiten Ausgestaltung können die Umlenkmittel 23a, 23b als drehbare Rollen oder Zylinder in Verbindung mit einer einstellbaren Reibungseinheit, im einfachsten Fall eine einstellbare Scheibenbremse oder Scheibenkupplung, ausgebildet sein. In einer nicht gezeigten Weiterbildung der Umlenkmittel 23a, 23b sind diese in der Position und/oder der Bremswirkung und somit der Reibwirkung steuer- und/oder regelbar, wobei als Istwertgeber ein Schwingungssensor im Turmkopf dienen kann. Die Anzahl der Umlenkmittel 23a, 23b ist dabei nicht auf zwei begrenzt, so können auch lediglich ein Umlenkmittel 23a, 23b oder auch drei Umlenkmittel 23a, 23b vorgesehen sein. Beispielweise kann auch eine Kombination aus einem starren bzw. gebremsten Umlenkmittel 23a, 23b und einer frei drehbaren Umlenkrolle vorgesehen sein.

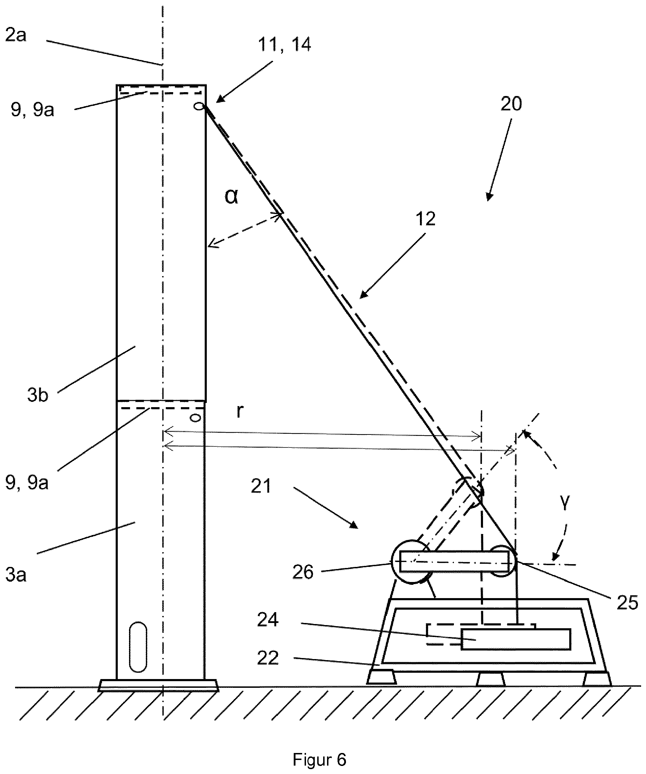

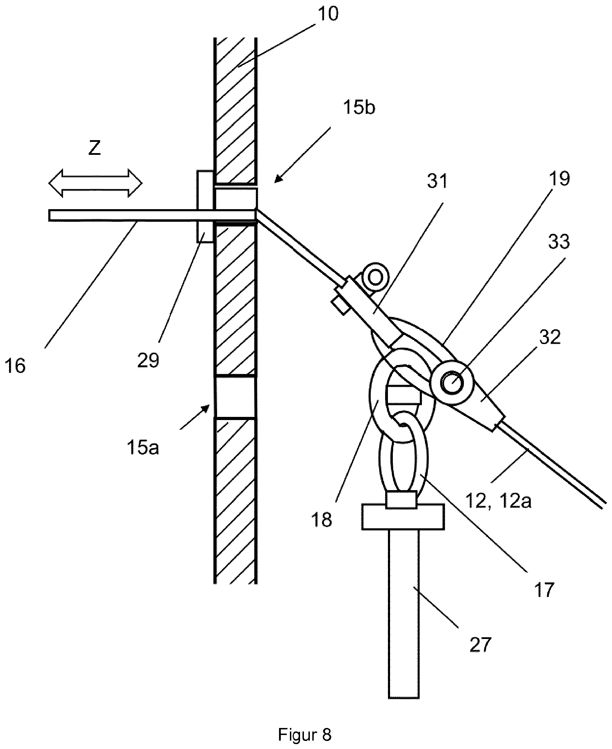

Die Fig. 6 zeigt einen Abschnitt eines Turms 2 mit einer Dämpfungseinrichtung 20 in einer alternativen Ausgestaltung gemäß der Erfindung. Der Turmabschnitt umfasst darstellungsbedingt lediglich zwei Turmsektionen 3a und 3b. Wie die Fig. 8 erkennen lässt, ist im oberen Abschnitt der zweiten Turmsektion 3b benachbart zum Ringflansch 9a an einem Turmanschlagpunkt (TAP) ein Kraftaufnahmeelement 11 und eine Durchführungseinheit 14 zum Anschlagen des oberen Abschnitts des Stahlseils 12 unter einem Winkel *α* (alpha) vorgesehen. Es sei wieder darauf hingewiesen, dass das Stahlseil 12, beispielsweise in Form eines Spiralseil 12a und/oder eines Rundlitzenseil 12b, stets einen gewissen Durchhang hat, welcher in Fig. 8 der Einfachheit halber nicht dargestellt ist. Der untere Abschnitt des Stahlseils 12 ist an einem von einer Schwenkachse entfernten Ende eines Schwenkhebels 25 der Dämpfungsvorrichtung 21 gehaltert. Der Schwenkhebel 25 ist über einen weiteren Abschnitt des Stahlseils 12 oder ein weiteres kurzes Stahlseil mit der Ballastmasse 24 verbunden. Der Abstand r vom Anschlagpunkt des Stahlseils 12 am Schwenkhebel 25 bis zur Mittelachse 2a des Turms 2 ist entsprechend der Winkelstellung *γ* (gamma) des Schwenkhebels 25 variabel und bestimmt, als ein Parameter von mehreren Parametern, den Dämpfungsgrad bzw. die Dämpfungswirkung der Dämpfungseinrichtung 20. An dem zur Schwenkachse benachbarten Ende des Schwenkhebels 25 ist eine Reibungseinheit 26, wobei die Wirkweise der Reibungseinheit 26 steuerbar oder passiv, semiaktiv oder aktiv regelbar ausgebildet sein kann. Die konstruktiven Ausgestaltungen der Reibungseinheit 26 zur Erzielung einer definierten Reibkraft sind dabei vielfältig, so kann die Reibungseinheit 26 im einfachsten Fall als einstellbare Scheibenbremse, Scheibenkupplung oder Reiblamellenkupplung ausgebildet sein. In einer verbesserten Ausgestaltung weist die Reibungseinheit 26 eine Mehrzahl von schwert- oder kreissegmentförmigen Reibelementen auf, die wenigstens eine Reibpaarung bilden, wobei wenigstens ein Reibelement schwenkbar an dem Schwenkhebel 25 gehaltert ist. Das schwenkbare Reibelement taucht dabei zwischen zwei stationäre Reibelemente ein, wodurch sich eine unterschiedliche Reibkraft und damit Dämpfungswirkung einstellt. Querbewegungen des Turms werden über den Schwenkhebel 25 in die Reibungseinheit 26 eingeleitet. In einer regelungstechnischen Weiterbildung der Dämpfungseinrichtung 20 ist als Istwertgeber für einen Dämpfungsregelkreis ein Beschleunigungs- und/oder Schwingungssensor im Turmkopf vorgesehen, so dass die Reibungskraft der Reibungseinheit 26 in vorgebbaren Grenzen steuer- und oder regelbar ist.

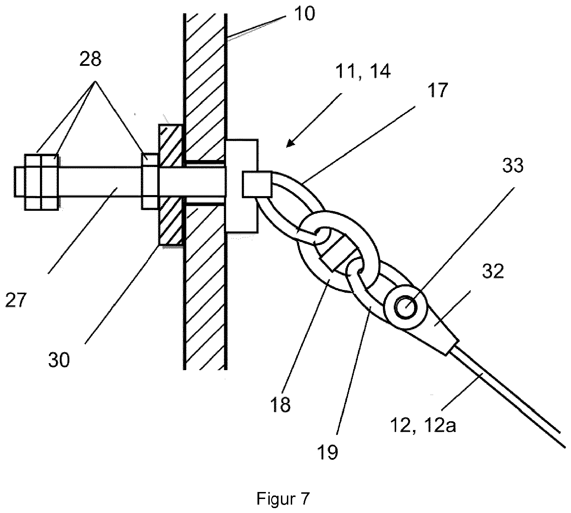

Die Fig. 7 zeigt eine schematische Ansicht einer Durchführungseinheit 14 in der Turmwandung 10 gemäß der Erfindung. Die Durchführungseinheit 14 umfasst zunächst ein Kraftaufnahmeelement 11, im Ausführungsbeispiel als sogenannter Lastring oder Lastbock 17 ausgebildet, beispielsweise ein "VLBG-PLUS Lastbock" der Firma RUD mit Schraube 27 und Sicherungsmuttern 28. Die Durchführungseinheit 14 umfasst weiterhin eine Platte 30 als Gegenlager an der Innenseite der Turmwand für die Zugkraft des Stahlseils 12 bzw. genauer des Spiralseils 12a. Das Spiralseil 12a ist über einen fest verbundenen Gabelkopf 32 mit einem Bolzen 33 über einen Ovalring 19 und ein trennbares dreiteiliges Verbindungsglied 18 mit dem Lastbock 17 verbunden.

Die Fig. 8 zeigt eine schematische Ansicht einer Führungsseildurchführung in der Turmwand 10 mit einer Wanddurchführung 15b. In die obere Wanddurchführung 15b ist eine Buchse 29 eingesetzt, durch die ein Führungsseil 16 läuft. Mit dem Führungsseil 16 wird das Stahlseil 12 bzw. genauer das Spiralseil 12a gemäß Doppelpfeil in die erforderliche Höhe gezogen oder bei der Demontage des Stahlseils 12 aus der gegebenen Höhe herabgelassen, so dass die Schraube 27 des Lastbocks 17 in die vorgesehene untere Wanddurchführung 15a einsetzbar bzw. aus dieser sicher entfernbar ist. Im Einzelnen ist das Führungsseil 16 zunächst über einen Schäkel 31 und dem Ovalring 19 mit dem Gabelkopf 32 des Spiralseils 12a verbunden. Der Lastbock 17 nebst Schraube 27 und das Verbindungsglied 18 hängen während des Hub- oder Senkvorgangs an dem Ovalring 19. In einer Abwandlung des Verfahrens wurde die Durchführungseinheit 14 mit dem Lastbock 17 und der Platte 30 bereits vollständig an der noch liegenden Turmsektion 3a, 3b, 3c, 3d, 3e auf dem Errichtungsplatz oder im Herstellerwerk montiert.

### Bezugszeichenliste

- 1: Windenergieanlage
- 2: Turm
- 3a, 3b, 3c, 3d, 3e: Turmsektionen
- 4: Maschinenhaus
- 5: Rotor
- 6: Rotornabe
- 8a, 8b: Rotorblätter
- 9: Anschlusselemente
- 9a: Ringflansch
- 11: Kraftaufnahmeelement
- 12: Stahlseil
- 12a: Spiralseil
- 12b: Rundlitzenseil
- 13: Klemmverbinder
- 14: Durchführungseinheit
- 15a: untere Wanddurchführung
- 15b: obere Wanddurchführung
- 16: Führungsseil
- 17: Lastring oder Lastbock
- 18: Verbindungsglied
- 19: Ovalring
- 20: Dämpfungseinrichtung
- 21: Dämpfungsvorrichtung
- 22: Stahlrahmen
- 23: Umlenkeinheit
- 23a,23b: Umlenkmittel
- 24: Ballastmasse
- 25: Schwenkhebel
- 26: Reibungseinheit
- 27: Schraube
- 29: Buchse
- 30: Platte
- 32: Gabelkopf
- 33: Bolzen

- TAP: Turmanschlagpunkt
- r: Abstand von der Achse des ersten (oberen) Umlenkmittels 23a bis zur Mittelachse 2a des Turms 2
- *α*: Winkel
- *β*: Gesamtumschlingungswinkel
- *β*₁: Umschlingungswinkel des ersten Umlenkmittels 23a
- *β*₂: Umschlingungswinkel des zweiten Umlenkmittels 23b
- *γ*: Winkelstellung des Schwenkhebels 25

## Patentansprüche

1. Verfahren zum Dämpfen von Schwingungen eines Turms (2) einer Windenergieanlage (1) während des Errichtens des Turms (2) und der Windenergieanlage (1), wobei der Turm (2) eine Mehrzahl von Turmsektionen (3a, 3b, 3c, 3d, 3e) umfasst, die jeweils ein unteres und ein oberes Anschlusselement (9) aufweisen, wobei an zumindest einer Turmsektion (3a, 3b, 3c, 3d, 3e) wenigstens ein Kraftaufnahmeelement (11), bevorzugt zwei, besonders bevorzugt vier Kraftaufnahmeelemente (11), bevorzugt benachbart zu dem oberen Anschlusselement (9) angeordnet sind, mit den Schritten:
a) Errichten eines Turms (2) mit einer Mehrzahl von Turmsektionen (3a, 3b, 3c, 3d, 3e),
b) Anschlagen eines ersten Endes eines ersten Stahlseils (12), nämlich eines Spiralseils (12a), an dem ersten Kraftaufnahmeelement (11) einer vorbestimmten Turmsektion (3a, 3b, 3c, 3d, 3e),
c) Verbinden des zweiten Endes des ersten Stahlseils (12) mit einem Ende eines zweiten Stahlseils (12), nämlich eines Rundlitzenseils (12b),
d) Führen des zweiten Stahlseils (12) durch eine Umlenkeinheit (23) einer Dämpfungsvorrichtung (21) mit wenigstens einem Umlenkmittel (23a, 23b), wobei die Dämpfungsvorrichtung (21) auf einer Geländeoberfläche außerhalb des Turms (2) und beabstandet vom Turm (2) positioniert ist, und
e) Verbinden des anderen Endes des zweiten Stahlseils (12) mit einer Ballastmasse (24) der Dämpfungsvorrichtung (21).

2. Verfahren nach Anspruch 1 mit dem zusätzlichen Schritt, dass vor dem Anschlagen des ersten Endes des ersten Stahlseils (12) das Kraftaufnahmeelement (11) an der Turmsektion (3a, 3b, 3c, 3d, 3e) im Wesentlichen quer zu einer Hauptwindrichtung ausgerichtet und/oder montiert wird.

3. Verfahren nach Anspruch 1 oder 2 mit dem zusätzlichen Schritt, dass ein zweites Kraftaufnahmeelement (11) an der Turmsektion (3a, 3b, 3c, 3d, 3e) derart angeordnet ist oder montiert wird, dass dieses um ca. 90° am Umfang der Turmsektion (3a, 3b, 3c, 3d, 3e) gegenüber der Position des ersten Kraftaufnahmeelements (11) versetzt ist.

4. Verfahren nach Anspruch 3 mit den zusätzlichen Schritten:
k) Anschlagen eines ersten Endes eines dritten Stahlseils (12), bevorzugt eines Spiralseils (12a), an dem zweiten Kraftaufnahmeelement (11) an der oder einer weiteren Turmsektion (3a, 3b, 3c, 3d, 3e),
I) Verbinden des zweiten Endes des dritten Stahlseils (12) mit einem Ende eines vierten Stahlseils (12), bevorzugt eines Rundlitzenseils (12b),
m) Führen des vierten Stahlseils (12) durch eine Umlenkeinheit (23) einer zweiten Dämpfungsvorrichtung (21) mit wenigstens einem Umlenkmittel (23a, 23b),
n) Verbinden des anderen Endes des vierten Stahlseils (12) mit einer Ballastmasse (24) der zweiten Dämpfungsvorrichtung (21).

5. Verfahren nach einem der vorangegangen Ansprüche mit dem zusätzlichen Schritt:
Positionieren der ersten Dämpfungsvorrichtung (21) radial derart beabstandet vom Turm (2), dass der Winkel des Stahlseils (12) zu einer horizontalen Ebene an der Dämpfungsvorrichtung (21) 30° bis 80° beträgt.

6. Verfahren nach Anspruch 4 mit dem zusätzlichen Schritt:
Positionieren der zweiten Dämpfungsvorrichtung (21) - bezogen auf die Mittelachse (2a) des Turms (2) - um ca. 90° zur ersten Dämpfungsvorrichtung (21) versetzt und radial derart vom Turm (2) beabstandet, dass der Winkel des dritten Stahlseils (12) zu einer horizontalen Ebene an der Dämpfungsvorrichtung (21) 30° bis 80° beträgt.

7. Verfahren nach Anspruch 4 mit dem zusätzlichen Schritt:
Einstellen der ersten und/oder zweiten Dämpfungsvorrichtung (21) auf einen vorbestimmten Dämpfungswert
durch Verändern der Position des wenigstens einen Umlenkmittels (23a, 23b) derart, dass ein Gesamtumschlingungswinkel *β* (beta) und damit der Reibungswiderstand vermindert oder erhöht wird, oder
durch Verändern der Position eines ersten Umlenkmittels (23a) und/oder eines zweiten Umlenkmittels (23b) derart, dass der Abstand zwischen dem ersten Umlenkmittel (23a) und dem zweiten Umlenkmittel (23b) und somit der Gesamtumschlingungswinkel *β* (beta) für das Stahlseil (12) und damit der Reibungswiderstand vermindert oder erhöht wird, oder
durch Verändern der Winkelstellung eines Schwenkhebels (25) der Dämpfungsvorrichtung (21), der mit einer einstellbaren Reibungseinheit (26) der Dämpfungsvorrichtung (21) in Wirkverbindung steht.

8. Dämpfungseinrichtung (20) zur Durchführung des Verfahrens nach einem der Ansprüche 1 bis 7 für einen Turm (2) einer Windenergieanlage (1) mit einer Mehrzahl von Turmsektionen (3a, 3b, 3c, 3d, 3e), umfassend eine Dämpfungsvorrichtung (21), welche ein Gestell (22) umfasst, in welchem eine Umlenkeinheit (23) und eine Ballastmasse (24) gelagert sind, wobei die Dämpfungsvorrichtung (21) auf einer Geländeoberfläche außerhalb des Turms (2) und beabstandet vom Turm (2) positionierbar ist, und umfassend ein über die Umlenkeinheit (23) geführtes Stahlseil (12), das einerseits mit der Ballastmasse (24) und andererseits mit wenigstens einem Kraftaufnahmeelement (11) an zumindest einer Turmsektion (3a, 3b, 3c, 3d, 3e) verbunden ist, wobei die Umlenkeinheit (23) wenigstens ein erstes Umlenkmittel (23a, 23b) aufweist, wobei das wenigstens eine Umlenkmittel (23a, 23b) in seiner Lage veränderbar ist, um die Dämpfung einzustellen, und wobei das Stahlseil (12) einen ersten Abschnitt aufweist, der als Spiralseil (12a) ausgebildet ist und an dem Kraftaufnahmeelement (11) der Turmsektion (3a, 3b, 3c, 3d, 3e) angeschlagen ist, und einen zweiten Abschnitt aufweist, der als Rundlitzenseil (12b) ausgebildet ist, welches über die Umlenkeinheit (23) geführt ist und mit der Ballastmasse (24) der Dämpfungsvorrichtung (21) verbunden ist, wobei das Spiralseil (12a) und das Rundlitzenseil (12b) durch einen Klemmverbinder (13) miteinander, bevorzugt lösbar, verbunden sind.

9. Dämpfungseinrichtung (20) nach Anspruch 8, **dadurch gekennzeichnet, dass** das Spiralseil (12a) an seinem von dem Klemmverbinder (13) entfernten Ende ein Anschlagelement aufweist, welches mit dem Kraftaufnahmeelement (11) an der Turmsektion (3a, 3b, 3c, 3d) verbunden ist.

10. Dämpfungseinrichtung (20) nach einem der Ansprüche 8 bis 9, **dadurch gekennzeichnet, dass** das Rundlitzenseil (12b) an seinem von dem Klemmverbinder (13) entfernten Ende ein Anschlagelement aufweist, welches mit der Ballastmasse (24) verbunden ist.

11. Dämpfungseinrichtung (20) nach einem der Ansprüche 8 bis 10, **dadurch gekennzeichnet, dass** die Dämpfungseinrichtung (20) ein zweites Umlenkmittel (23b) aufweist, wobei wenigstens ein Umlenkmittel (23a, 23b) in wenigstens einer Ebene, vorzugsweise in zwei Ebenen verschiebbar gelagert ist, wodurch ein Gesamtumschlingungswinkel *β* (beta) für das Stahlseil (12), bevorzugt im Bereich von 10° bis 240° , einstellbar ist.

12. Dämpfungseinrichtung (20) nach Anspruch 11, **dadurch gekennzeichnet, dass** das Rundlitzenseil (12b) über das erste Umlenkmittel (23a) und das zweite Umlenkmittel (23b) führbar oder geführt ist, wobei die Umlenkmittel (23a, 23b) zumindest teilweise eine konvexe Oberfläche aus einen Material aufweisen, welches in Verbindung mit einem Stahlseil einen Reibungskoeffizienten von größer als 0,3, bevorzugt größer als 0,4 aufweist.

13. Dämpfungseinrichtung (20) nach Anspruch 11 oder 12, **dadurch gekennzeichnet, dass** das erste und/oder das zweite Umlenkmittel (23a, 23b) als Umlenkbalken oder bremsbare Umlenkrolle ausgebildet sind.

## Claims

1. Method for damping oscillations of a tower (2) of a wind turbine (1) during the erection of the tower (2) and of the wind turbine (1), wherein the tower (2) comprises a plurality of tower sections (3a, 3b, 3c, 3d, 3e) which each have a lower and an upper connection element (9), wherein at least one force-absorbing element (11), preferably two, particularly preferably four force-absorbing elements (11), are arranged on at least one tower section (3a, 3b, 3c, 3d, 3e), preferably adjacent to the upper connection element (9), with the following steps:
a) erecting a tower (2) with a plurality of tower sections (3a, 3b, 3c, 3d, 3e),
b) fastening a first end of a first steel cable (12), namely a spiral cable (12a), to the first force-absorbing element (11) of a predetermined tower section (3a, 3b, 3c, 3d, 3e),
c) connecting the second end of the first steel cable (12) to one end of a second steel cable (12), namely a round strand cable (12b),
d) guiding the second steel cable (12) through a deflecting unit (23) of a damping apparatus (21) with at least one deflecting means (23a, 23b), wherein the damping apparatus (21) is positioned on a terrain surface outside the tower (2) and in a manner spaced apart from the tower (2), and
e) connecting the other end of the second steel cable (12) to a ballast mass (24) of the damping apparatus (21).

2. Method according to Claim 1 with the additional step that, before the first end of the first steel cable (12) is fastened, the force-absorbing element (11) is oriented and/or mounted on the tower section (3a, 3b, 3c, 3d, 3e) substantially transversely with respect to a main wind direction.

3. Method according to Claim 1 or 2 with the additional step that a second force-absorbing element (11) is arranged or mounted on the tower section (3a, 3b, 3c, 3d, 3e) in such a manner that said second force-absorbing element (11) is offset by approximately 90° on the circumference of the tower section (3a, 3b, 3c, 3d, 3e) in relation to the position of the first force-absorbing element (11).

4. Method according to Claim 3 with the following additional steps:
k) fastening a first end of a third steel cable (12), preferably a spiral cable (12a), to the second force-absorbing element (11) on the or on a further tower section (3a, 3b, 3c, 3d, 3e),
1) connecting the second end of the third steel cable (12) to one end of a fourth steel cable (12), preferably a round strand cable (12b),
m) guiding the fourth steel cable (12) through a deflecting unit (23) of a second damping apparatus (21) with at least one deflecting means (23a, 23b),
n) connecting the other end of the fourth steel cable (12) to a ballast mass (24) of the second damping apparatus (21).

5. Method according to one of the preceding claims, with the following additional step:
positioning the first damping apparatus (21) spaced apart radially from the tower (2) in such a manner that the angle of the steel cable (12) with respect to a horizonal plane on the damping apparatus (21) is 30° to 80°.

6. Method according to Claim 4 with the following additional step:
positioning the second damping apparatus (21) - with respect to the centre axis (2a) of the tower (2) - in a manner offset by approximately 90° with respect to the first damping apparatus (21) and spaced apart radially from the tower (2) in such a manner that the angle of the third steel cable (12) with respect to a horizontal plane on the damping apparatus (21) is 30° to 80°.

7. Method according to Clam 4 with the following additional step:
adjusting the first and/or second damping apparatus (21) to a predetermined damping value by changing the position of the at least one deflecting means (23a, 23b) in such a manner that an overall wrap angle β (beta) and thus the frictional resistance is reduced or increased, or
by changing the position of a first deflecting means (23a) and/or of a second deflecting means (23b) in such a manner that the distance between the first deflecting means (23a) and the second deflecting means (23b) and therefore the overall wrap angle β (beta) for the steel cable (12) and thus the frictional resistance is reduced or increased, or
by changing the angular position of a pivot lever (25) of the damping apparatus (21), said pivot lever being operatively connected to an adjustable friction unit (26) of the damping apparatus (21).

8. Damping device (20) for carrying out the method according to one of Claims 1 to 7 for a tower (2) of a wind turbine (1) having a plurality of tower sections (3a, 3b, 3c, 3d, 3e), comprising a damping apparatus (21) which comprises a framework (22) in which a deflecting unit (23) and a ballast mass (24) are mounted, wherein the damping apparatus (21) can be positioned on a terrain surface outside the tower (2) and spaced apart from the tower (2), and comprising a steel cable (12) which is guided via the deflecting unit (23) and is connected at one end to the ballast mass (24) and at the other end to at least one force-absorbing element (11) on at least one tower section (3a, 3b, 3c, 3d, 3e), wherein the deflecting unit (23) has at least one first deflecting means (23a, 23b), wherein the at least one deflecting means (23a, 23b) can be changed in its position in order to adjust the damping, and wherein the steel cable (12) has a first portion, which is in the form of a spiral cable (12a) and is fastened to the force-absorbing element (11) of the tower section (3a, 3b, 3c, 3d, 3e), and a second portion, which is in the form of a round strand cable (12b) which is guided via the deflecting unit (23) and is connected to the ballast mass (24) of the damping apparatus (21), wherein the spiral cable (12a) and the round strand cable (12b) are connected to each other, preferably releasably, by means of a clamping connector (13).

9. Damping device (20) according to Claim 8, **characterized in that** that end of the spiral cable (12a) which is remote from the clamping connector (13) has a fastening element which is connected to the force-absorbing element (11) on the tower section (3a, 3b, 3c, 3d).

10. Damping device (20) according to either of Claims 8 and 9, **characterized in that** that end of the round strand cable (12b) which is remote from the clamping connector (13) has a fastening element which is connected to the ballast mass (24).

11. Damping device (20) according to one of Claims 8 to 10, **characterized in that** the damping device (20) has a second deflecting means (23b), wherein at least one deflecting means (23a, 23b) is mounted displaceably in at least one plane, preferably in two planes, as a result of which an overall wrap angle β (beta) for the steel cable (12) can be adjusted, preferably in the range of 10° to 240°.

12. Damping device (20) according to Claim 11, **characterized in that** the round strand cable (12b) can be guided or is guided via the first deflecting means (23a) and the second deflecting means (23b), wherein the deflecting means (23a, 23b) at least partially have a convex surface made of a material which, in conjunction with a steel cable, has a coefficient of friction of greater than 0.3, preferably greater than 0.4.

13. Damping device (20) according to Claim 11 or 12, **characterized in that** the first and/or the second deflecting means (23a, 23b) are/is in the form of a deflecting bar or deflecting pulley which can be braked.

## Revendications

1. Procédé d'amortissement des oscillations d'une tour (2) d'un aérogénérateur (1) pendant la construction de la tour (2) et de l'aérogénérateur (1), la tour (2) comportant une pluralité de sections de tour (3a, 3b, 3c, 3d, 3e), qui possèdent respectivement un élément de raccordement (9) inférieur et un supérieur, au moins un élément récepteur de force (11), de préférence deux, notamment de préférence quatre éléments récepteurs de force (11) étant disposés au niveau d'au moins une section de tour (3a, 3b, 3c, 3d, 3e), de préférence voisins de l'élément de raccordement supérieur (9), comprenant les étapes suivantes :
a) construction d'une tour (2) comprenant une pluralité de sections de tour (3a, 3b, 3c, 3d, 3e),
b) élingage d'une première extrémité d'un premier câble en acier (12), à savoir un câble spiralé (12a), au premier élément récepteur de force (11) d'une section de tour (3a, 3b, 3c, 3d, 3e) prédéterminée,
c) liaison de la deuxième extrémité du premier câble en acier (12) avec une extrémité d'un deuxième câble en acier (12), à savoir un câble à torons ronds (12b),
d) guidage du deuxième câble en acier (12) à travers une unité de renvoi (23) d'un arrangement d'amortissement (21) comprenant au moins un moyen de renvoi (23a, 23b), l'arrangement d'amortissement (21) étant positionné sur une surface de terrain en-dehors de la tour (2) et à distance de la tour (2), et
e) liaison de l'autre extrémité du deuxième câble en acier (12) avec une masse de ballastage (24) de l'arrangement d'amortissement (21).

2. Procédé selon la revendication 1, comprenant l'étape supplémentaire selon laquelle, avant l'élingage de la première extrémité du premier câble en acier (12), l'élément récepteur de force (11) est orienté et/ou monté sur la section de tour (3a, 3b, 3c, 3d, 3e) sensiblement transversalement par rapport à une direction principale du vent.

3. Procédé selon la revendication 1 ou 2, comprenant l'étape supplémentaire selon laquelle le deuxième élément récepteur de force (11) est disposé ou monté sur la section de tour (3a, 3b, 3c, 3d, 3e) de telle sorte que celui-ci est décalé d'environ 90° sur le pourtour de la section de tour (3a, 3b, 3c, 3d, 3e) par rapport à la position du premier élément récepteur de force (11).

4. Procédé selon la revendication 3, comprenant les étapes supplémentaires suivantes :
k) élingage d'une première extrémité d'un troisième câble en acier (12), de préférence un câble spiralé (12a), au deuxième élément récepteur de force (11) sur ladite ou une autre section de tour (3a, 3b, 3c, 3d, 3e),
l) liaison de la deuxième extrémité du troisième câble en acier (12) avec une extrémité d'un quatrième câble en acier (12), de préférence un câble à torons ronds (12b),
m) guidage du quatrième câble en acier (12) à travers une unité de renvoi (23) d'un deuxième arrangement d'amortissement (21) comprenant au moins un moyen de renvoi (23a, 23b),
n) liaison de l'autre extrémité du quatrième câble en acier (12) avec une masse de ballastage (24) du deuxième arrangement d'amortissement (21).

5. Procédé selon l'une des revendications précédentes, comprenant l'étape supplémentaire suivante :
positionnement du premier arrangement d'amortissement (21) espacé radialement de la tour (2) de telle sorte que l'angle du câble en acier (12) par rapport à un plan horizontal au niveau de l'arrangement d'amortissement (21) est de 30° à 80°.

6. Procédé selon la revendication 4, comprenant l'étape supplémentaire suivante :
positionnement du deuxième arrangement d'amortissement (21) - en référence à l'axe central (2a) de la tour (2) - décalé d'environ 90° du premier arrangement d'amortissement (21) et espacé radialement de la tour (2) de telle sorte que l'angle du troisième câble en acier (12) par rapport à un plan horizontal au niveau de l'arrangement d'amortissement (21) est de 30° à 80°.

7. Procédé selon la revendication 4, comprenant l'étape supplémentaire suivante :
réglage du premier et/ou du deuxième arrangement d'amortissement (21) à une valeur d'amortissement prédéterminée
par modification de la position de l'au moins un moyen de renvoi (23a, 23b) de telle sorte qu'un angle d'enroulement total β (beta) et ainsi la résistance due au frottement est réduit ou augmenté, ou
par modification de la position d'un premier moyen de renvoi (23a) et/ou d'un deuxième moyen de renvoi (23b) de telle sorte que l'écart entre le premier moyen de renvoi (23a) et le deuxième moyen de renvoi (23b) et ainsi l'angle d'enroulement total β (beta) pour le câble en acier (12) et ainsi la résistance due au frottement est réduit ou augmenté, ou
par modification de la position angulaire d'un levier de pivotement (25) de l'arrangement d'amortissement (21) qui se trouve en liaison fonctionnelle avec une unité de frottement (26) réglable de l'arrangement d'amortissement (21).

8. Dispositif d'amortissement (20) destiné à mettre en œuvre le procédé selon l'une des revendications 1 à 7 pour une tour (2) d'un aérogénérateur (1) comprenant une pluralité de sections de tour (3a, 3b, 3c, 3d, 3e), comprenant un arrangement d'amortissement (21), lequel comporte un bâti (22) dans lequel sont supportées une unité de renvoi (23) et une masse de ballastage (24), l'arrangement d'amortissement (21) pouvant être positionné sur une surface de terrain en-dehors de la tour (2) et à distance de la tour (2), et
comportant un câble en acier (12) guidé par le biais de l'unité de renvoi (23), lequel est relié d'un côté à la masse de ballastage (24) et de l'autre côté à au moins un élément récepteur de force (11) au niveau d'au moins une section de tour (3a, 3b, 3c, 3d, 3e),
l'unité de renvoi (23) possédant au moins un premier moyen de renvoi (23a, 23b), la position de l'au moins un moyen de renvoi (23a, 23b) pouvant être modifiée afin de régler l'amortisseur, et
le câble en acier (12) possédant une première portion, qui est réalisée sous la forme d'un câble spiralé (12a) et est élinguée à l'élément récepteur de force (11) de la section de tour (3a, 3b, 3c, 3d, 3e), et une deuxième portion, qui est réalisée sous la forme d'un câble à torons ronds (12b), lequel est guidé par le biais de l'unité de renvoi (23) et est relié à la masse de ballastage (24) de l'arrangement d'amortissement (21), le câble spiralé (12a) et le câble à torons ronds (12b) étant reliés l'un à l'autre par un connecteur à serrage (13), de préférence de manière amovible.

9. Dispositif d'amortissement (20) selon la revendication 8, **caractérisé en ce que** le câble spiralé (12a) possède, à son extrémité distante du connecteur à serrage (13), un élément d'élingage qui est relié à l'élément récepteur de force (11) au niveau de la section de tour (3a, 3b, 3c, 3d).

10. Dispositif d'amortissement (20) selon l'une des revendications 8 à 9, **caractérisé en ce que** le câble à torons ronds (12b) possède, à son extrémité distante du connecteur à serrage (13), un élément d'élingage qui est relié à la masse de ballastage (24).

11. Dispositif d'amortissement (20) selon l'une des revendications 8 à 10, **caractérisé en ce que** le dispositif d'amortissement (20) possède un deuxième moyen de renvoi (23b), au moins un moyen de renvoi (23a, 23b) étant monté déplaçable dans au moins un plan, de préférence dans deux plans, moyennant quoi l'angle d'enroulement total β (beta) pour le câble en acier (12) peut être réglé, de préférence dans la plage de 10° à 240° .

12. Dispositif d'amortissement (20) selon la revendication 11, **caractérisé en ce que** le câble à torons ronds (12b) peut être guidé ou est guidé par le biais du premier moyen de renvoi (23a) et du deuxième moyen de renvoi (23b), les moyens de renvoi (23a, 23b) possédant au moins partiellement une surface convexe en un matériau qui, en liaison avec un câble en acier, présente un coefficient de frottement supérieur à 0,3, de préférence supérieur à 0,4.

13. Dispositif d'amortissement (20) selon la revendication 11 ou 12, **caractérisé en ce que** le premier et/ou le deuxième moyen de renvoi (23a, 23b) sont réalisés sous la forme de barres de renvoi ou de galets de renvoi à freinage.
